Europäisches Patentamt

European Patent Office

Office européen des brevets

(19)

(11) EP 0 447 306 B1

(12) FASCICULE DE BREVET EUROPEEN

(45) Date de publication et mention
de la délivrance du brevet:
**26.06.1996 Bulletin 1996/26**

(51) Int Cl.6: **G06K 9/68**, G06K 9/46

(21) Numéro de dépôt: **91400650.7**

(22) Date de dépôt: **08.03.1991**

(54) **Dispositif de reconnaissance de séquences dans un signal multidimensionnel**

Vorrichtung zur Erkennung von Sequenzen in einem mehrdimensionalen Signal

Device for recognising sequences in a multidimensional signal

(84) Etats contractants désignés:
**DE GB**

(30) Priorité: **13.03.1990 FR 9003170**

(43) Date de publication de la demande:
**18.09.1991 Bulletin 1991/38**

(73) Titulaire: **THOMSON-CSF**
**75008 Paris (FR)**

(72) Inventeurs:
• **Refregier, Philippe**
**F-92045 Paris la Défense (FR)**
• **Potier, Dominique**
**F-92045 Paris la Défense (FR)**
• **Micheron, François**
**F-92045 Paris la Défense (FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

(56) Documents cités:
EP-A- 0 063 765          EP-A- 0 106 534
GB-A- 2 029 994

## Description

**Dispositif de reconnaissance de séquences dans un signal multidimensionnel.**

Le domaine de l'invention est celui de la reconnaissance de séquences de signaux multidimensionnels, et notamment de signaux d'images.

Par signaux multidimensionnels, on entend les signaux constitués d'éléments multidimensionnels, ou vecteurs. Dans le cas des signaux d'images, chaque image est un vecteur du signal.

L'invention s'applique par exemple à la détection automatique d'une sous-séquence d'images donnée dans une séquence d'images diffusée par un programme vidéo, permettant alors le pilotage automatique d'enregistrements sélectifs. Elle peut également être utilisée comme dispositif d'accès à la mémoire d'une banque d'images par le contenu.

L'invention trouve également de nombreuses applications dans les domaines du traitement d'images et de la vision automatique, par exemple en robotique.

Plus généralement, l'invention s'applique à la reconnaissance de tout type de signaux multidimensionnels, tels que les spectres temps-fréquence de signaux acoustiques, les signaux radar ou les signaux multicapteurs.

On connaît plusieurs méthodes de détection d'une séquence de signal connue a priori.

Le document EP-A- 106 534 décrit un dispositif de reconnaissance de caractères comprenant un premier circuit de corrélation pour calculer les premières correlations entre chaque partie d'un caractère d'image et des données relatives aux caractères de référence, et un second circuit de correlation reconnaissant la position d'un caractère le plus semblable au caractère de référence, grâce à la mise en évidence de la valeur maximale des premières correlations $R(x)$ ($x$ étant un facteur variable représentant une région en saisissant la partie des données de l'image de caractères) par la conversion de chacune des premières correlations $R(x)$ en une seconde correlation exprimée : $[R(x) - R(x-\alpha)] - [R(x+\alpha) - R(x)]$, où $\alpha$ est une valeur prédéterminée, déterminée en accord avec la grandeur des données des caractères de référence. Le document GB-A- 2 029 994 se réfère à un dispositif de reconnaissance des caractères consistant en des circuits de lecture, stockage, segmentation et normalisation. Le vecteur caractérisant ainsi obtenu est alors normalisé au moyen d'un circuit de normalisation des vecteurs, et ensuite, projeté sur un ensemble d'"eigenvectors" correspondant aux classes de caractères qui doivent être reconnues. On effectue finalement une sélection en relation avec un algorithme prédéterminé en utilisant les résultats des projections.

Le document EP-A- 00 63 765 décrit un dispositif de reconnaissance des caractères, grâce auquel un caractère d'entrée est divisé en une pluralité de sous-caractères comparés à une pluralité de caractères caractéristiques partiels standard pour former une matrice de similarité des caractères d'entrée. Ladite matrice est alors comparée à une pluralité de matrices de similarité de référence contenant des caractères de référence standard, le caractère d'entrée étant ainsi reconnu comme le caractère standard présentant la similarité la plus proche. Cela est obtenu au moyen d'un premier circuit calculateur de similarité des vecteurs d'entrée et un deuxième circuit calculateur de similarité, calculant les similarités entre la matrice de similarité des vecteurs d'entrée et la matrice de similarité de référence. Un comparateur identifie à la fois un caractère de référence.

La technique la plus utilisée est celle du filtrage linéaire, ou de corrélation suivant une norme donnée. Plus précisément, quand la détection ne tient pas compte des propriétés d'invariance, notamment en rotation et en échelle, la technique du filtrage adapté est celle qui est la plus largement employée dans le cadre du traitement du signal.

Cependant, lorsque le signal à analyser est riche en informations, par exemple dans le cas des images vidéo, correspondant à des vecteurs de grande dimension, l'application directe de la technique du filtrage linéaire est très coûteuse en temps de calcul. De plus, la mémoire nécessaire pour sauvegarder les caractéristiques du filtre est dans ce cas importante.

Une méthode plus simple, vis à vis des critères de complexité de calcul et de taille mémoire nécessaire, consiste à réaliser une compression du vecteur de signal à analyser, avant filtrage. Cette compression doit être simple, afin de permettre le traitement en temps réel. Ainsi, dans le cas d'une image haute définition, on peut définir des sous-images de faible résolution, de quelques dizaines par quelques dizaines de pixels, par exemple en moyennant des valeurs à l'intérieur de groupe de pixels de l'image haute résolution.

Cette transformation, indépendante du vecteur de départ, se traduit inévitablement par une perte d'information, et donc, par une perte de discrimination.

Il est possible de pallier cet inconvénient en filtrant, ou corrélant, simultanément plusieurs vecteurs de la séquence analysée. Cependant, cela entraîne une augmentation importante de la puissance de calcul et de la taille mémoire nécessaires.

L'invention a pour objectif de pallier ces inconvénients.

Plus précisément, l'invention a pour objectif de fournir un dispositif de reconnaissance de séquences de signaux multidimensionnels possédant de bonnes performances de discrimination.

Un objectif complémentaire de l'invention est de fournir un tel dispositif nécessitant des moyens de filtrage ou de corrélation de faible complexité, notamment en ce qui concerne la puissance de calcul et la taille mémoire.

Un autre objectif de l'invention est de fournir un tel dispositif qui soit de réalisation peu coûteuse, et donc susceptible d'application grand-public.

L'invention a également pour objectif de fournir un tel dispositif aisément reprogrammable, c'est-à-dire permettant de modifier rapidement la ou les séquence(s) à reconnaître.

Ces objectifs, ainsi que d'autres qui apparaîtront par la suite, sont atteints à l'aide d'un dispositif de reconnaissance de séquences dans un signal produit en continu et constitué de vecteurs multidimensionnels, comprenant, pour chacune desdites séquences à reconnaître, des premiers moyens de corrélation (au sens large) de vecteurs représentatifs dudit signal avec un vecteur de masquage déterminé à partir des vecteurs représentatifs de ladite séquence à reconnaître, produisant une suite de valeurs correspondant au degré de similarité des deux vecteurs corrélés, des seconds moyens de corrélation d'une séquence de ladite suite de valeurs avec une séquence de référence déterminée à partir des vecteurs composant ladite séquence à reconnaître, produisant des valeurs correspondant au degré de similarité des deux séquences corrélées, et des moyens de décision de la validité de la reconnaissance, par comparaison desdites valeurs correspondant au degré de similarité des deux séquences corrélées avec une valeur de seuil.

De cette façon, le dispositif de l'invention réalise, de façon cascadée, une reconnaissance spatiale et une reconnaissance temporelle de la séquence à reconnaître.

De façon avantageuse, lesdits vecteurs représentatifs dudit signal sont fournis par des moyens de compression d'information, à partir desdits vecteurs constitutifs dudit signal.

Dans une mode de réalisation particulier de l'invention, lesdits moyens de compression d'information agissent par moyennage.

Préférentiellement, les premiers moyens de corrélation et/ou les seconds moyens de corrélation comprennent des moyens de calcul d'une norme euclidienne.

Dans ce cas, le dispositif de l'invention est un dispositif non-linéaire. La complexité supérieure des calculs par rapport à un dispositif linéaire est aisément compensée par le nombre réduit d'opérations nécessaires.

Dans un mode de réalisation avantageux de l'invention, le dispositif comprend des moyens d'adaptation de ladite valeur du seuil en fonction du niveau de bruit admissible.

Le dispositif peut également comprendre des moyens de transformation dudit degré de similarité, par exemple en fonction de la valeur de seuil maximale.

Avantageusement, le dispositif de l'invention comprend des moyens de détermination dudit vecteur de masquage et/ou de ladite séquence de référence, utilisant une règle d'apprentissage minimisant la résistance au bruit.

De façon préférentielle, lesdits moyens de détermination dudit vecteur de masquage comprennent des moyens de moyennage desdits vecteurs représentatifs de ladite séquence à reconnaître, et des moyens de détermination de ladite séquence de référence, par corrélation de chacun desdits vecteurs représentatifs de ladite séquence à reconnaître avec ledit vecteur de masquage.

Cet apprentissage relativement simple permet de rendre le dispositif facilement reprogrammable.

D'autres caractéristiques et avantages de l'invention apparaîtront à la lecture suivante d'un mode de réalisation préférentiel de l'invention, donné à titre illustratif et non limitatif, et des dessins annexés dans lesquels :

- la figure 1 représente un schéma synoptique d'un dispositif de reconnaissance de séquences d'images selon l'invention ;
- la figure 2 schématise le traitement d'une séquence d'images dans le dispositif de la figure 1.

Le mode de réalisation présenté à titre préférentiel concerne la détection de sous-séquences d'images connues dans une séquence d'images produites en continu. A titre d'exemple, un tel dispositif peut être appliqué à un système de programmation d'enregistrement vidéo.

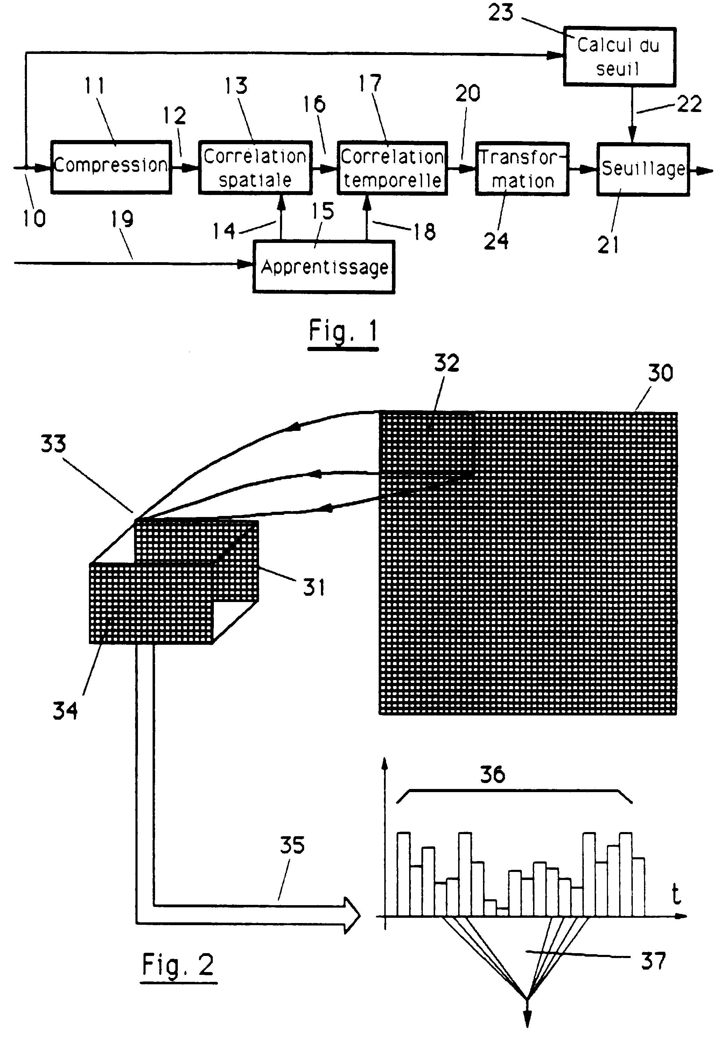

La figure 1 présente un schéma synoptique d'un tel dispositif.

Chacune des images reçues 10 est, dans un premier temps, comprimée par un module 11 de compression d'information. Ainsi, les images 10 de la séquence à analyser, par exemple de résolution 400 colonnes par 625 lignes, sont réduites en images comprimées 12 -ou imagettes-, par exemple de résolution 20 par 20 pixels. Ce calcul est fait en temps réel à l'occurence de chaque nouvelle image, soit par exemple, pour la cadence vidéo, toutes les 1/25 secondes.

Le module 11 de compression de l'information n'est pas un élément obligatoire de l'invention. Son seul but est de réduire la quantité d'informations à traiter. Toutefois, cela entraîne une perte de discrimination, par rapport aux images de départ.

L'invention comprend principalement deux modules de corrélation cascadés, réalisant respectivement une reconnaissance spatiale de chaque image ou imagette 12, puis une reconnaissance temporelle de la suite d'images 16.

Le premier module de corrélation 13, fonctionnant à la même cadence que le module de compression 11, calcule la corrélation de chaque image comprimée 12 avec un masque de référence 14. L'algorithme de calcul, ainsi que le mode d'élaboration par le module d'apprentissage 15 du masque de référence, sont précisés par la suite.

Ce traitement fournit une suite temporelle 16: la suite des corrélations des images comprimées 12 avec le masque de référence 14. Un second module de corrélation 17 effectue la comparaison entre la série temporelle 16 et la série de référence 18, obtenue à partir de la séquence à détecter 19. Le résultat de ce calcul, réalisé toutes les 1/25 secondes, donne le degré de similarité 20 entre la séquence d'images courante observée et la séquence à reconnaître.

Un module de seuillage 21 compare ce degré de similarité 20 à un seuil 22, de façon à décider de la reconnaissance ou non de la séquence recherchée. La séquence courante sera considérée comme reconnue quand le degré de similarité $S(t)$ 20 sera inférieur au seuil donné $S_{seuil}$ 22.

Le seuil 22 utilisé peut être fixe ou variable, notamment en fonction du niveau de bruit admissible.

Toute fonction transformant $S(t)$ peut être utilisée. Dans ce cas, un module 23 de calcul du niveau de seuil détermine la valeur du seuil 22 à appliquer. Ceci peut être intéressant pour plusieurs objectifs tels que la réduction de la dynamique en sortie, la détection de la reconnaissance de la séquence sur un signal maximum, ou binaire,... Une transformation possible est, par exemple,

$$S(t) \rightarrow \log(1 - S(t)/S_{max})$$

où $S_{max}$ est la valeur maximale possible de $S(t)$.

Le dispositif présenté peut être étendu à la recherche de plusieurs séquences d'images. Dans ce cas, les deux modules de corrélation 13 et/ou 17 sont dupliqués, autant de fois qu'il y a de séquences à reconnaître.

Dans la pratique, un module de corrélation spatiale 13 et un module de corrélation temporelle 17 suffisent, les masques et les séquences de référence correspondant à chaque séquence à reconnaître étant sélectivement utilisés.

La figure 2 présente le traitement réalisé sur chaque image 30. L'image 30 est comprimée en une sous-image 31, le groupe de pixels 32 correspondant au pixel 33 de l'image comprimée 31. Celle-ci est ensuite corrélée avec le masque 34. La valeur 35 de la corrélation est d'autant plus importante que l'image comprimée 31 est différente du masque 34. La suite 36 des valeurs 35 de corrélation est corrélée avec la suite de référence. cela correspond donc à une mesure sur une fenêtre glissante 37.

Du point de vue mathématique, le traitement peut être séparé en trois étapes : compression de l'image, corrélation avec un masque et corrélation avec une suite de référence.

La compression de l'image peut être obtenue par l'équation suivante, correspondant à un moyennage, pour chaque pixel i de l'image comprimée : où :

$$X_i^t \quad = \quad \frac{1}{N} . \sum_{j=1}^{N} \quad w_{i,j} . Im_{f(i,j)}^t \qquad (1)$$

$Im_j^t$ est le $j^{ème}$ pixel de l'image de départ (non comprimé) à l'instant t.

$X_i^t$ est le $i^{ème}$ pixel de l'image comprimée à l'instant t.

$w_{i,j}$ sont des coefficients appliqués lors de la pondération. Le cas le plus simple est celui où $w_{i,j} = 1$ pour tout i,j, mais toute autre fenêtre de pondération peut également être appliquée.

$f(i,j)$ définit le voisinage des pixels sur lequel on fait la pondération pour obtenir le pixel i de l'image comprimée.

$N$ est le nombre de pixels sur lequel on fait la pondération, c'est-à-dire la compression.

L'étape de corrélation avec un masque est déterminé par :

$$Y^t = N_1(|X^t> - |F>) \qquad (2)$$

où $Y^t$ est la corrélation (au sens d'une norme au-moins au voisinage des imagettes à détecter) de $X_i^t$ avec $F_i$.

$|X^t>$, $|F>$ sont les notations vectorielles correspondant à

$X_i^t$ et $F_i$, masque appliquée aux images comprimées,

$N_1(.)$ représente une norme au-moins dans un voisinage des imagettes de la séquence :

$$|X_0^1> - |F> , |X_0^2> - |F> ,..., |X_0^T> - |F>.$$

T étant le nombre d'images composant la séquence.

La troisième étape correspond à l'équation

$$S(t) = N_2(Y(t) - h) \qquad (3)$$

où $S(t)$ représente la sortie du système à l'instant t.

$Y(t)$ est la notation vectorielle correspondant à $(Y^{t+1-T}, ... Y^t)$,

$h$ est la notation vectorielle correspondant à $(h^1, h^2, .., h^T)$.

Plus précisément, si

$$|X_0^1> , |X_0^2> , ..., |X_0^T>$$

représentent les T imagettes de la sous-séquence à détecter (calculées elles-mêmes à partir de T images) ; $h^1$, $h^2$, ..., $h^T$, représentent les sorties

$$Y_0^1, Y_0^2, ... Y_0^T$$

obtenues sur cette séquence avec le masque IF>.

$N_2$ représente une norme.

L'objectif à atteindre est la détection d'une séquence d'images connue a priori. Une mesure appropriée de la corrélation, au sens large, entre la séquence à détecter et la séquence observée est donc plutôt une norme qu'un produit scalaire comme cela est généralement employé pour la mesure de corrélations.

Dans ce cas le dispositif de l'invention utilise un traitement cascadé non-linéaire. Cela entraîne des calculs plus efficaces. L'invention présente l'avantage de réduire le nombre de calculs à effectuer, permettant de réaliser les élévations au carré correspondant aux normes en temps réel.

Les normes $N_1$ et $N_2$ peuvent avantageusement être des normes euclidiennes.

Ces normes permettent en effet de minimiser le nombre de séquences d'images qui donneraient la même suite temporelle $Y^t$ une fois corrélées au filtre de référence, et d'offrir une bonne résistance au bruit.

Dans ce cas, les équations (2) et (3) s'écrivent respectivement :

$$Y^t = \sum_{i=1}^{M} (F_i - X_i^t)^2$$

où M est le nombre de pixels de l'image comprimée IX$^t$>, et

$$S(t) = \sum_{l=1}^{T} (Y^{t+l \cdot T} - h^l)^2$$

Le fonctionnement du dispositif de reconnaissance nécessite un apprentissage pour les deux modules de corrélation, à partir de la séquence d'images à reconnaître. Il est notamment possible d'utiliser les deux règles d'apprentissage suivantes :

$$F_i = \frac{1}{T} \sum_{l=1}^{T} Xa_i^l$$

$$h^p = Ya^p = \sum_{i=1}^{M} (F_i - Xa_i^l)^2$$

où $Xa_i^l$ est le pixel i de l'image I de la séquence à détecter.

La simplicité de ces règles d'apprentissage permet la réalisation de systèmes programmables, c'est-à-dire permettant de changer rapidement et simplement la ou les séquence(s) à repérer.

Il est également possible d'utiliser d'autres règles d'apprentissage, permettant, au prix d'un calcul plus ou moins complexe, d'obtenir un masque et une suite de références plus efficaces, c'est-à-dire minimisant le nombre de fausses reconnaissances.

Le nombre de coefficients devant être mémorisés étant réduit, il est possible d'utiliser plusieurs masques et suites de référence, et donc de rechercher plusieurs séquences d'images, sans nécessiter une taille mémoire importante.

Avec un tel dispositif, un masque IF> de taille 20x20 pixels codés sur un octet correspond à une mémoire de 400 octets. Si la durée de la séquence analysée est de 2 secondes, la mémoire nécessaire pour stocker les coefficients h est de 100 octets s'ils sont codés sur 2 octets. Ce qui, globalement, nécessite donc une mémoire de 500 octets.

La puissance de calcul nécessaire est dans ce cas de : nb.(M+T).N, où nb est le nombre d'opérations élémentaires, T est le nombre d'images dans la séquence à détecter, N est le nombre d'images par seconde, M est le nombre de pixels de l'image comprimée.

Dans le cas d'une image comprimée de 400 pixels, produite à un rythme de 25 par seconde, et pour une séquence à détecter de deux secondes, le nombre d'opérations élémentaires étant égal à 3, la puissance de calcul nécessaire est : 33 000 opérations/s. Cela ne nécessite pas un processeur de haute capacité, et peut donc être implanté dans un système grand-public à faible coût.

La compression d'image n'est pas prise en compte dans le calcul. Des circuits spécialisés permettent réaliser cette fonction, tels ceux réalisés dans les dispositifs d'enregistrement grand-public permettant l'incrustation d'images.

Ainsi, le dispositif de l'invention présente de bonnes performances de discrimination, tout en ne nécessitant qu'une faible puissance de calcul et peu de mémoire.

De nombreux autres modes de réalisation de l'invention peuvent être envisagés. Ainsi, il est possible d'utiliser d'autres techniques de calcul connues, aussi bien pour la corrélation de l'image avec le masque, que pour la corrélation de la séquence courante avec la séquence de référence.

L'invention ne se limite pas à la détection d'images vidéo. Elle trouve notamment de nombreuses applications dans le domaine de la robotique. A titre d'exemple, elle peut permettre la classification d'objets défilant sur un tapis roulant, et filmés par une caméra fixe.

Dans ce cas, plusieurs séquences sont recherchées, correspondant à chacun des objets à classer. Il est alors possible d'utiliser des moyens de corrélation et d'apprentissage spécifiques, tenant compte notamment des propriétés d'invariance par rotation, afin de repérer l'objet quelle que soit sa position.

Une autre application robotique de l'invention est la détection de disfonctionnement. Ainsi, dans le cas d'un robot réalisant toujours la même tâche, la séquence à reconnaître correspond à la séquence d'actions exécutée par le robot. Tant qu'il n'y a pas de défaut, la reconnaissance est toujours faite. Dès que la valeur de sortie 20 du second corrélateur dépasse un certain seuil, le dispositif de l'invention signale un défaut dans le fonctionnement du robot.

Ces applications dans le domaine de la robotique présente l'avantage d'être peu coûteuses, en particulier en comparaison avec les systèmes spécialisés de traitement d'images. Le dispositif de l'invention peut par exemple être implanté dans un micro-ordinateur de type courant, couplé à une caméra.

Plus généralement, toute séquence de signaux multidimensionnels peut être traitée avec profit par le dispositif de l'invention, et notamment les spectres temps-fréquence de signaux acoustiques, les signaux multicapteurs ou les signaux radar. Dans ce cas, les vecteurs constituant ces signaux subissent un traitement identique à celui décrit pour les images d'un signal vidéo.

## Revendications

1. Dispositif de reconnaissance de séquences (19) dans un signal (10) produit en continu et constitué de vecteurs multidimensionnels,

   caractérisé en ce qu'il comprend, pour chacune desdites séquences (19) à reconnaître, des premiers moyens (13) de corrélation spatial de vecteurs (12;33) représentatifs dudit signal (10) avec un vecteur (14;34) de masquage déterminé à partir des vecteurs représentatifs de ladite séquence (19) à reconnaître, produisant une suite (36) de valeurs (16;35) correspondant au degré de similarité des deux vecteurs (12,14 ; 33,34) corrélés,
   des seconds moyens (17) de corrélation temporelle d'une séquence de ladite suite (36) de valeurs (16;35) avec une séquence de référence (18;37) déterminée à partir des vecteurs composant ladite séquence (19) à reconnaître, produisant des valeurs (20) correspondant au degré de similarité des deux séquences corrélées (16,18),
   et des moyens (21) de décision de la validité de la reconnaissance, par comparaison desdites valeurs (20) correspondant au degré de similarité des deux séquences corrélées avec une valeur de seuil (22).

2. Dispositif selon la revendication 1, caractérisé en ce que lesdits vecteurs (12;33) représentatifs dudit signal (10) sont fournis par des moyens (11) de compression d'information, à partir desdits (30) vecteurs constitutifs dudit signal (10).

3. Dispositif selon la revendication 2, caractérisé en ce que lesdits moyens (11) de compression d'information agissent par moyennage.

4. Dispositif selon l'une quelconque des revendications 1 et 3, caractérisé en ce que les premiers moyens (13) de corrélation et/ou les seconds moyens (17) de corrélation comprennent des moyens de calcul d'une norme euclidienne.

5. Disposistif selon l'une quelconque des revendications 1 à 4, caractérisé en ce qu'il comprend des moyens (23) d'adaptation de ladite valeur du seuil en fonction du niveau de bruit admissible.

6. Dispositif selon l'une quelconque des revendications 1 à 5, caractérisé en ce qu'il comprend des moyens (24) de transformation dudit degré de similarité (20), par exemple en fonction de la valeur de seuil maximale.

7. Dispositif selon l'une quelconque des revendications 1 à 6, caractérisé en ce qu'il comprend des moyens (15) de détermination dudit vecteur de masquage (14) et/ou de ladite séquence de référence (18), utilisant une règle d'apprentissage minimisant la résistance au bruit.

8.  Dispositif selon la revendication 7, caractérisé en ce que lesdits moyens (15) de détermination dudit vecteur de masquage (14) comprennent des moyens de moyennage desdits vecteurs représentatifs de ladite séquence à reconnaître, et en ce que lesdits moyens (15) de détermination de ladite séquence de référence (18) comprennent des moyens de corrélation de chacun desdits vecteurs (12) représentatifs de ladite séquence à reconnaître avec ledit vecteur de masquage (14).

## Patentansprüche

1.  Vorrichtung zum Erkennen von Folgen (19) in einem kontinuierlich erzeugten Signal (10), das von mehrdimensionalen Vektoren gebildet wird, dadurch gekennzeichnet, daß sie für jede der zu erkennenden Folgen (19) aufweist:

    -   erste Mittel (13) zur räumlichen Korrelation von für das Signal (10) repräsentativen Vektoren (12; 33) mit einem Maskenvektor (14; 34), der ausgehend von für die zu erkennende Folge (19) repräsentativen Vektoren bestimmt ist, wobei diese Mittel eine Folge (36) von Werten (16; 35) entsprechend dem Ähnlichkeitsgrad der beiden korrelierten Werte (12, 14; 33, 34) erzeugt,
    -   zweite zeitliche Korrelationsmittel zur Korrelation einer Folge (36) von Werten (16; 35) mit einer Bezugsfolge (18; 37), die aufgrund von die zu erkennende Folge (19) bildenden Werten bestimmt wird, wobei diese Mittel Werte (20) erzeugen, die dem Ähnlichkeitsgrad der beiden korrelierten Folgen (16, 18) entsprechen,
    -   und Mittel (21), die über die Gültigkeit der Erkennung durch Vergleich der dem Ähnlichkeitsgrad der beiden korrelierten Folgen entsprechenden Werte (20) mit einem Schwellwert (22) entscheiden.

2.  Vorrichtung nach Anspruch 1, dadurch gekennzeichnet, daß die für das Signal (10) repräsentativen Vektoren (12; 33) von Mitteln (11) zur Informationskompression geliefert werden, die von den das Signal (10) bildenden Werten (30) gespeist werden.

3.  Vorrichtung nach Anspruch 2, dadurch gekennzeichnet, daß die Informationskompressionsmittel (11) eine Mittelung durchführen.

4.  Vorrichtung nach einem beliebigen der Ansprüche 1 und 3, dadurch gekennzeichnet, daß die ersten Korrelationsmittel (13) und/oder die zweiten Korrelationsmittel (17) Mittel zur Berechnung eines euklidischen Standards enthalten.

5.  Vorrichtung nach einem beliebigen der Ansprüche 1 bis 4, dadurch gekennzeichnet, daß sie Mittel (23) aufweist, um den Schwellwert an den zulässigen Rauschpegel anzupassen.

6.  Vorrichtung nach einem beliebigen der Ansprüche 1 bis 5, dadurch gekennzeichnet, daß sie Mittel (24) zur Umwandlung des Ähnlichkeitsgrads (20) beispielsweise abhängig vom maximalen Schwellwert besitzen.

7.  Vorrichtung nach einem beliebigen der Ansprüche 1 bis 6, dadurch gekennzeichnet, daß Mittel (15) zur Bestimmung des Maskenvektors (14) und/oder der Bezugsfolge (18) vorgesehen sind, die eine die Rauschempfindlichkeit minimisierende Lernregel verwenden.

8.  Vorrichtung nach Anspruch 7, dadurch gekennzeichnet, daß die Mittel (15) zur Bestimmung des Maskenvektors (14) Mittel aufweisen, die die Vektoren der zu erkennenden Folge ausmitteln, und daß die Mittel (15) zur Bestimmung der Bezugsfolge (18) Mittel zur Korrelation jedes für die zu erkennende Folge repräsentativen Vektors (12) mit dem Maskenvektor (14) enthalten.

## Claims

1.  Device for recognizing sequences (19) in a signal (10) produced continuously and consisting of multidimensional vectors,

    characterized in that it comprises, for each of the said sequences (19) to be recognized, first means (13) of spatial correlation of vectors (12; 33) representative of the said signal (10) with a masking vector (14; 34)

7

determined from the vectors representative of the said sequence (19) to be recognized, producing a set (36) of values (16; 35) corresponding to the degree of similarity of the two correlated vectors (12, 14; 33, 34), second means (17) of temporal correlation of a sequence of the said set (36) of values (16; 35) with a reference sequence (18; 37) determined from the vectors making up the said sequence (19) to be recognized, producing values (20) corresponding to the degree of similarity of the two correlated sequences (16, 18), and means (21) for deciding the validity of the recognition, by comparing the said values (20) corresponding to the degree of similarity of the two correlated sequences with a threshold value (22).

2. Device according to Claim 1, characterized in that the said vectors (12; 33) representative of the said signal (10) are provided by means (11) of compressing information, from the said vectors (30) making up the said signal (10).

3. Device according to Claim 2, characterized in that the said means (11) of compressing information work by averaging.

4. Device according to either of Claims 1 and 3, characterized in that the first means (13) of correlation and/or the second means (17) of correlation comprise means of computing a Euclidian norm.

5. Device according to any one of Claims 1 to 4, characterized in that it comprises means (23) for adapting the said value of the threshold as a function of the admissible noise level.

6. Device according to any one of Claims 1 to 5, characterized in that it comprises means (24) for transforming the said degree of similarity (20), for example as a function of the maximum threshold value.

7. Device according to any one of Claims 1 to 6, characterized in that it comprises means (15) for determining the said masking vector (14) and/or the said reference sequence (18), using a learning rule which minimizes resistance to noise.

8. Device according to Claim 7, characterized in that the said means (15) of determining the said masking vector (14) comprise means of averaging the said vectors representative of the said sequence to be recognized, and in that the said means (15) of determining the said reference sequence (18) comprise means of correlation of each of the said vectors (12) representative of the said sequence to be recognized with the said masking vector (14).

Fig. 1

Fig. 2